# EUROPÄISCHE PATENTSCHRIFT

(11) **EP 2 471 146 B1**
(45) Veröffentlichungstag und Bekanntmachung des Hinweises auf die Patenterteilung: **31.08.2016**
(21) Anmeldenummer: 10742809.6
(22) Anmeldetag: 04.08.2010
(51) Int. Cl.: H01R 13/639, B60L 11/18

(54) **STECKVORRICHTUNGSSYSTEM MIT AKTUATOR**
PLUG-AND-SOCKET SYSTEM WITH AN ACTUATOR
SYSTÈME DE DISPOSITIF D'ENFICHAGE COMPRENANT UN ACTIONNEUR

(30) Priorität: 25.08.2009 DE 102009043845
(43) Veröffentlichungstag der Anmeldung: 04.07.2012
(73) Patentinhaber: AMAD - Mennekes Holding GmbH & Co. KG, 57399 Kirchhundem (DE)
(72) Erfinder: LAZZARO, Volker, 57399 Kirchhundem (DE)
(74) Vertreter: Beckmann, Jürgen
(86) Internationale Anmeldenummer: PCT/EP2010/061366
(87) Internationale Veröffentlichungsnummer: WO 2011/023514

(56) Entgegenhaltungen:
- WO-A1-97/05672
- US-A- 4 063 790
- US-A- 5 711 558
- US-A1- 2006 145 663

## Beschreibung

Die Erfindung betrifft ein Steckvorrichtungssystem mit einem Steckvorrichtungselement, beispielsweise einer Steckdose, sowie mit einem Aktuator zur Bewegung eines Zielbauteils in dem Steckvorrichtungselement.

Bei Kraftsteckvorrichtungen (z. B. nach Norm DIN EN 60309) ist es bekannt, einen Stecker in einer Kupplung/Dose zu verriegeln, um ein unbeabsichtigtes Trennen der Steckvorrichtung zu verhindern.

Aus der US 5 711 558 ist ein induktives Ladesystem für ein Elektrofahrzeug bekannt, bei dem ein beweglicher Stift in die Ausnehmung eines Steckers eingreift und diesen dadurch verriegelt, wenn der Stecker in der zugehörigen Kupplung eingesteckt ist. Der Stift wird von einem Motor oder einer Spule über ein Kabel und einen Verzögerungsmechanismus betätigt.

Vor diesem Hintergrund war es Aufgabe der vorliegenden Erfindung, eine alternative Konstruktion einer Steckvorrichtung bereitzustellen, die sich insbesondere bei schwierigen bzw. engen Bauverhältnissen einsetzen lässt.

Diese Aufgabe wird durch ein Steckvorrichtungssystem mit den Merkmalen des Anspruchs 1 sowie durch ein Verfahren mit den Merkmalen des Anspruchs 2 gelöst. Vorteilhafte Ausgestaltungen sind in den Unteransprüchen enthalten.

Gemäß ihrem ersten Aspekt betrifft die Erfindung demnach ein Steckvorrichtungssystem mit den folgenden Komponenten:
- Einem Steckvorrichtungselement mit (mindestens) einem beweglichen Bauteil, welches im Folgenden als "Zielbauteil" bezeichnet wird. Der Ausdruck "Steckvorrichtungselement" soll dabei eine der komplementären Komponenten einer Steckvorrichtung bezeichnen, z. B. eine Dose bzw. Kupplung oder einen Stecker.
- Einen Aktuator zur aktiven und/oder passiven Bewegung eines zum Aktuator gehörenden Bauteils, welches im Folgenden "Aktuatorbauteil" genannt wird. Unter einer "aktiven Bewegung" wird dabei eine mechanische Bewegung verstanden, die im Aktuator selbst erzeugt wird, beispielsweise durch (elektro-)magnetische Kräfte. Im Gegensatz dazu soll eine "passive Bewegung" des Aktuatorbauteils dann vorliegen, wenn diese von einer Bewegung von Komponenten außerhalb des Aktuators verursacht wird. Letzteres ist beispielsweise bei einem manuell zu betätigenden Aktuator der Fall.
- Ein flexibles Kopplungselement zur Übertragung von Kraft und/oder Bewegung vom Aktuatorbauteil zum Zielbauteil. Die Flexibilität des Kopplungselementes bedeutet dabei, dass dieses (in Grenzen) Formveränderungen erfahren kann, ohne hierdurch in seiner Funktion der Kraft-/Bewegungsübertragung beeinträchtigt zu werden. Vorzugsweise sind die möglichen Formveränderungen so groß, dass sie die wahlweise Anordnung des Aktuatorbauteils an mindestens zwei verschiedenen, nicht überlappenden Positionen erlauben.

Die Erfindung betrifft ferner ein korrespondierendes Verfahren zur Bewegung eines Zielbauteils in einem Steckvorrichtungselement, welches dadurch gekennzeichnet ist, dass eine Betätigungskraft und/oder eine Bewegung von einem Aktuator über ein flexibles Kopplungselement auf das Zielbauteil übertragen wird.

Das beschriebene Steckvorrichtungssystem und das zugehörige Verfahren verwenden ein flexibles Kopplungselement, um die an einem ersten Ort (Aktuator) erzeugte Kraft/Bewegung an einen zweiten Ort (Steckvorrichtungselement) zu übertragen. Dies hat den Vorteil, dass der Aktuator und das Steckvorrichtungselement auf verschiedenen Trägern angeordnet sein können, die sich unabhängig voneinander bewegen, beispielsweise relativ zueinander vibrieren können. Derartige Relativbewegungen zwischen den Trägern können nämlich vom flexiblen Kopplungselement aufgefangen werden, ohne die Wirkungsübertragung vom Aktuator zum Zielbauteil zu stören. Ein weiterer Vorteil des Systems ist, dass es in Trägersystemen unterschiedlicher Geometrie eingesetzt werden kann, da das flexible Kopplungselement mehrere Relativpositionen von Aktuator und Steckvorrichtungselement zulässt. Auf diese Weise können die Herstellungskosten gesenkt werden, da dasselbe Steckvorrichtungssystem in unterschiedlichen Geräten, Gehäusen etc. eingesetzt werden kann.

Im Folgenden werden verschiedene Weiterbildungen der Erfindung beschrieben, welche gleichermaßen für das Steckvorrichtungssystem wie für das zugehörige Verfahren angewendet werden können.

Das flexible Kopplungselement lässt sich auf unterschiedliche Weisen realisieren. Gemäß einer ersten Ausführungsform kann es beispielsweise einen Seilzug enthalten, d. h. ein langgestrecktes, strangförmiges und flexibles Teil, das gegenüber einer Zugbelastung in seiner Axialrichtung im Wesentlichen starr ist. Typischerweise wird ein derartiger Seilzug mit seinen beiden Enden direkt am Aktuatorbauteil einerseits bzw. Zielbauteil andererseits befestigt, so dass er eine Zugkraft vom Aktuatorbauteil auf das Zielbauteil übertragen kann. Der Seilzug kann beispielsweise aus Kunststoff oder Stahl(seilen) bestehen.

Der vorstehend genannte Seilzug wird vorteilhafterweise in einer Hülse oder Hülle geführt. Zum einen schützt dies den Seilzug und verhindert dessen Kontakt mit der Umgebung. Zum anderen können die mechanischen Eigenschaften der Hülse so gewählt werden, dass sich die Wirkung des Seilzuges in gewünschter Weise verändert. Wenn die Hülse beispielsweise in ihrer Axialrichtung längenunveränderlich ist, können Zugkräfte mit dem Seilzug auch dann übertragen werden, wenn der Seilzug sich auf gekrümmter Bahn zwischen Zielbauteil und Aktuatorbauteil erstreckt.

Gemäß einer anderen Weiterbildung des Seilzuges ist dieser so ausgebildet, dass er in seiner Axialrichtung Schubkräfte übertragen kann. Hierzu kann der Seilzug mit einer gewissen Steifheit in Axialrichtung ausgestattet sein und insbesondere in einer Hülse der vorstehend beschriebenen Art geführt sein.

Gemäß einer anderen Ausgestaltung des Kopplungselementes enthält dieses einen Hydraulikschlauch. Eine Kraftübertragung zwischen dem Aktuatorbauteil und dem Zielbauteil kann dann vermöge der im Schlauch enthaltenen (inkompressiblen) Hydraulikflüssigkeit erfolgen.

Bei der vorstehend beschriebenen Ausführungsform enthält der Hydraulikschlauch vorzugsweise eine elektrisch nicht leitfähige Hydraulikflüssigkeit, beispielsweise ein Öl. In diesem Falle ist sichergestellt, dass bei einer Leckage des Hydraulikschlauches keine Kurzschlüsse im elektrischen System des Steckvorrichtungselementes oder des Aktuators verursacht werden können.

Unabhängig von seiner konkreten Ausgestaltung ist das Kopplungselement vorzugsweise (reversibel) lösbar mit dem Aktuator und/oder mit dem Steckvorrichtungselement verbunden, beispielsweise über eine Schraub-, Steck-, oder Bajonettverbindung. Dies erleichtert zum einen die Montage des Steckvorrichtungssystems, da nicht alle seine drei Bestandteile (Steckvorrichtungselement, Kopplungselement, Aktuator) in einem Schritt montiert werden müssen, sondern dies zeitlich versetzt erfolgen kann. Zum anderen ist es auf diese Weise auch möglich, für Reparatur- oder Wartungszwecke die Komponenten des Systems einzeln auszutauschen.

Der Aktuator kann insbesondere als ein elektromechanischer Aktuator ausgebildet sein, d. h. als ein Gerät, welches elektrische Energie in mechanische Energie (Bewegung) umwandelt. In der Regel wird ein solcher elektromechanischer Aktuator mindestens einen Elektromagneten enthalten, welcher im stromführenden Zustand eine magnetische Anziehungskraft (z. B. auf das Aktuatorbauteil) ausüben kann. Durch Magnetkräfte in einem Motor ist es beispielsweise auch möglich, Rotationsbewegungen zu erzeugen.

Gemäß einer anderen Ausführungsform der Erfindung ist der Aktuator als ein manuell zu betätigendes Element ausgestaltet. Beispielsweise kann der Aktuator einen Druckknopf, Drehknopf, Hebel oder dergleichen enthalten, welcher von einem Benutzer betätigt (bewegt) werden kann und dessen Bewegung sich dann auf das Aktuatorbauteil überträgt.

Die Bewegung des Zielbauteils im Steckvorrichtungselement kann unterschiedlichen Zwecken dienen. Beispielsweise könnte das Zielbauteil zu einem elektrischen Schalter gehören, über welchen die Kontakte des Steckvorrichtungselementes stromlos bzw. stromführend geschaltet werden. Gemäß einer bevorzugten Ausführungsform der Erfindung ist das Zielbauteil so ausgestaltet, dass es in einer Verriegelungsposition ein eingestecktes komplementäres Steckvorrichtungselement verriegeln kann und in einer Öffnungsposition die Steckbewegung dieses komplementären Steckvorrichtungselementes freigibt. Mit anderen Worten dient das Zielbauteil dann der wahlweisen Verriegelung einer Steckvorrichtung im zusammengesteckten Zustand.

Im vorstehenden Ausführungsbeispiel kann das Zielbauteil insbesondere als ein Stift ausgebildet sein, der in der Verriegelungsposition in eine Ausnehmung (beispielsweise in die Nut oder hinter eine Nase) eines eingesteckten komplementären Steckvorrichtungselementes eingreift. Vorzugsweise erfolgt die Bewegung dieses Verriegelungsstiftes dabei in Radialrichtung (bzw. mit einer Komponente in Radialrichtung) in Bezug auf die Steckachse zwischen den betrachteten Steckvorrichtungselementen.

Das Steckvorrichtungselement kann insbesondere eine Gerätedose sein, d. h. eine Kupplung (mit Kontaktbuchsen), die fest in ein Gerät eingebaut ist. In diesem Falle kann die Flexibilität des Kopplungselementes dazu ausgenutzt werden, das Steckvorrichtungssystem in Geräten unterschiedlicher Geometrien unterzubringen.

Gemäß einem zweiten Aspekt betrifft die Erfindung ein Steckvorrichtungssystem mit den folgenden Komponenten:
- Einem Steckvorrichtungselement mit einem beweglichen Zielbauteil, das in einer Verriegelungsposition ein eingestecktes komplementäres Steckvorrichtungselement verriegeln kann, während es in einer Öffnungsposition den Steckvorgang freigibt.
- Einen elektromechanischen Aktuator zur aktiven Bewegung des Zielbauteils zwischen der Verriegelungsposition und der Öffnungsposition.

Das beschriebene Steckvorrichtungssystem kann insbesondere in der oben beschriebenen Weise ausgestaltet sein, also zwischen dem elektromechanischen Aktuator und dem Zielbauteil ein flexibles Kopplungselement aufweisen. Bezüglich der Einzelheiten, Definitionen und Modifikationen kann im Übrigen auch auf die obige Beschreibung verwiesen werden. Das Steckvorrichtungssystem gemäß dem zweiten Aspekt der Erfindung verwendet einen elektromechanischen Aktuator, um eine Verriegelung der Steckvorrichtung im eingesteckten Zustand zu erreichen. Gegenüber rein mechanischen und manuell zu betätigenden Verriegelungen hat dies den Vorteil, dass es eine Automatisierung des Verriegelungsvorganges zulässt. Dies erhöht nicht nur den Komfort, sondern insbesondere auch die Sicherheit, da ein Verriegeln nicht vergessen oder absichtlich unterlassen werden kann. Die elektrische Energie für den elektromechanischen Aktuator kann insbesondere aus den Stromleitungen entnommen werden, die zu dem zu verriegelnden Steckvorrichtungselement führen.

Im Folgenden wird die Erfindung mit Hilfe der Figuren beispielhaft näher erläutert. Dabei zeigt:

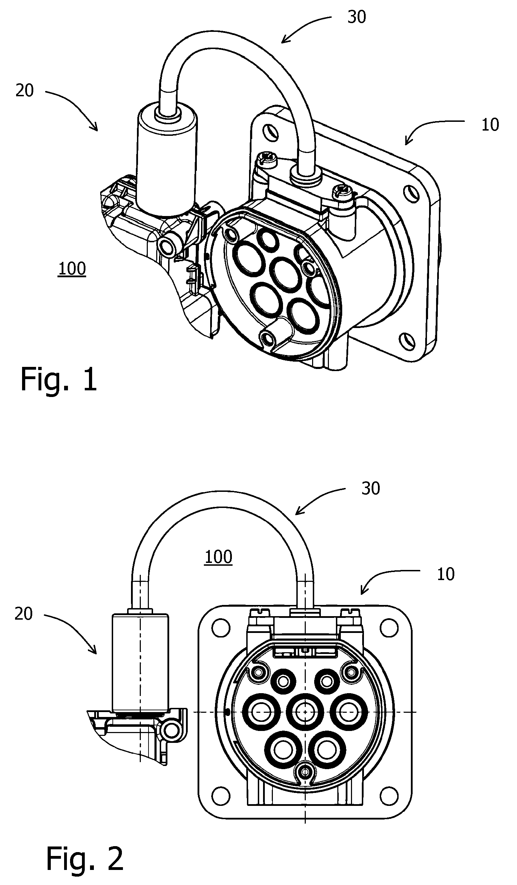

- Fig. 1: in einer perspektivischen Ansicht ein Steckvorrichtungssystem gemäß einer Ausführungsform der vorliegenden Erfindung;
- Fig. 2: das Steckvorrichtungssystem in einer Frontansicht;
- Fig. 3: das Steckvorrichtungssystem in einer Seitenansicht;
- Fig. 4: (a) das Verriegelungssystem und (b) den Aktuator des Steckvorrichtungssystems in einem Schnitt entlang der Linie IV-IV von Figur 3.

Die Figuren zeigen in verschiedenen Ansichten ein Beispiel für ein Steckvorrichtungssystem 100 gemäß der Erfindung. Das Steckvorrichtungssystem kann an einem beliebigen Träger montiert sein kann, beispielsweise einem Gehäuse, einer Wand, einem Gerät, oder einem Fahrzeug. Einzelheiten dieses Trägers sind in den Figuren zur Vereinfachung weggelassen.

Das Steckvorrichtungssystem 100 umfasst die folgenden drei Hauptkomponenten:
- Ein Steckvorrichtungselement 10, hier in Form einer Kraftsteckvorrichtungsdose mit mehreren Kontakten (Buchsen).
- Einen Aktuator 20.
- Ein flexibles Kopplungselement 30, welches den Aktuator 20 mit dem Steckvorrichtungselement 10 verbindet.

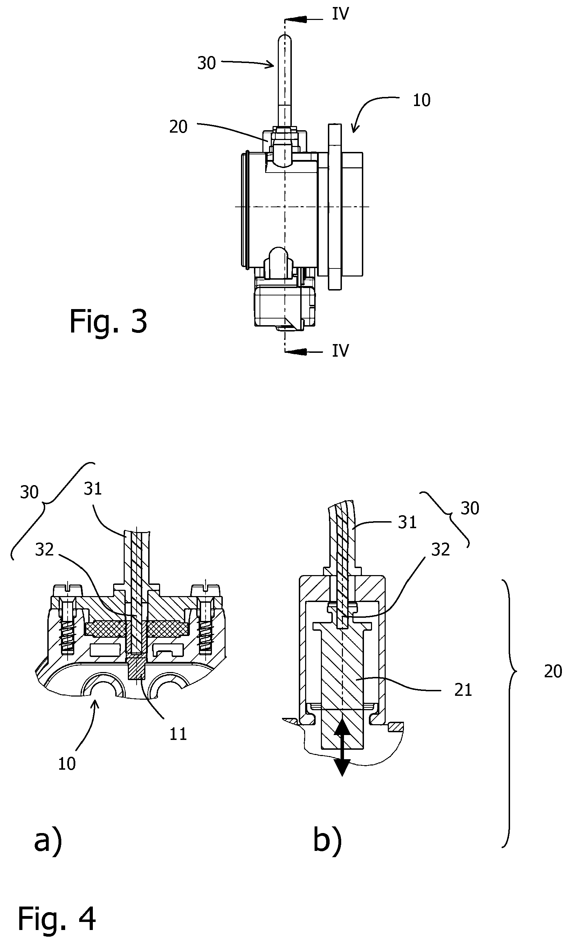

Figur 4 b) zeigt in einer Detailansicht die Anbindung des Kopplungselementes 30 an den Aktuator 20. Das Kopplungselement 30 besteht demnach aus einem Seilzug 32, der in einer Hülse 31 nach Art eines Bowdenzuges axial verschiebebeweglich geführt ist. Der Seilzug 32 ist an seinem Ende mit einem Aktuatorbauteil 21 verbunden, das hierdurch einen axial verschiebebeweglichen Kolben gebildet wird. Durch einen nicht näher dargestellten elektromechanischen Mechanismus, beispielsweise einen Elektromagneten, kann der Kolben 21 in seiner Axialrichtung (Doppelpfeil) verschoben werden. Seine Bewegung und Kraft übertragen sich dabei auf den Seilzug 32.

Figur 4 a) zeigt das andere Ende des Kopplungselementes 30, das am Steckvorrichtungselement 10 angebracht ist. Der Seilzug 32 ist dabei mit einem Zielbauteil des Steckvorrichtungselementes verbunden, das hier als ein axial verschiebebeweglicher Stift 11 realisiert ist. In der Darstellung befindet sich der Stift 11 in einer Verriegelungsposition, in welcher er in das Innere des Steckvorrichtungselementes 10 hineinragt. Wenn dort ein Stecker als komplementäres Steckvorrichtungselement eingesteckt ist (nicht dargestellt), kann der Stift 11 in eine Nut oder hinter eine Nase dieses Steckers eingreifen und ihn so gegen einen unbeabsichtigten Auszug verriegeln. Ein Rückzug des Stiftes 11 aus dem Inneren des Steckvorrichtungselementes 10 in eine Öffnungsposition gibt dagegen die Bewegung des eingesteckten Steckers wieder frei.

Das beschriebene Steckvorrichtungssystem 100 hat den Vorteil, dass es einen elektromechanischen Aktuator 20 zur Verriegelung einer Steckvorrichtung verwendet. Hierdurch lässt sich der Verriegelungsvorgang automatisieren und sehr flexibel steuern. Gemäß einem zweiten, davon unabhängigen Aspekt verwendet das Steckvorrichtungssystem 100 zwischen dem (hier elektromechanisch ausgebildeten) Aktuator 20 und dem Steckvorrichtungselement 10 ein flexibles Kopplungselement 30. Dies hat den Vorteil, dass die relative Anordnung von Steckvorrichtungselement und Aktuator in weiten Grenzen variabel ist, so dass ein und dasselbe Steckvorrichtungssystem in unterschiedlichen Umgebungen verbaut werden kann. Des Weiteren ist es möglich, den Aktuator und das Steckvorrichtungselement auf unterschiedlichen, relativ zueinander (in Maßen) beweglichen Trägern anzuordnen. Nicht zuletzt kann das Kopplungselement 30 auch in nahezu jeder beliebigen Länge hergestellt werden, so dass Aktuator und Steckvorrichtungselement räumlich weit voneinander entfernt angeordnet werden können.

## Patentansprüche

1. Steckvorrichtungssystem (100), umfassend:
- ein Steckvorrichtungselement (10) mit einem zugehörigen beweglichen Zielbauteil (11);
- einen Aktuator (20) zur aktiven und/oder passiven Bewegung eines Aktuatorbauteils (21);
**gekennzeichnet durch**
- ein flexibles Kopplungselement (30) zur Übertragung von Kraft und/oder Bewegung vom Aktuatorbauteil zum Zielbauteil;
- die Anordnung von Aktuator (20) und Steckvorrichtungselement (10) auf verschiedenen Trägern, die sich unabhängig voneinander bewegen können.

2. Verfahren zur Bewegung eines zu einem Steckvorrichtungselement (10) gehörenden Zielbauteils (11) in dem genannten Steckvorrichtungselement (10),
**dadurch gekennzeichnet, dass** eine Betätigungskraft und/oder eine Bewegung von einem Aktuator (20) über ein flexibles Kopplungselement (30) auf das Zielbauteil (11) übertragen wird, wobei der Aktuator (20) und das Steckvorrichtungselement (10) auf verschiedenen Trägern angeordnet sind, die sich unabhängig voneinander bewegen können.

3. Steckvorrichtungssystem (100) nach Anspruch 1,
**dadurch gekennzeichnet, dass** das Kopplungselement (30) einen Seilzug (32) enthält.

4. Steckvorrichtungssystem (100) nach Anspruch 3,
**dadurch gekennzeichnet, dass** der Seilzug (32) in einer Hülse (31) geführt wird.

5. Steckvorrichtungssystem (100) nach Anspruch 4 oder 5,
**dadurch gekennzeichnet, dass** der Seilzug (32) in Axialrichtung Schubkräfte übertragen kann.

6. Steckvorrichtungssystem (100) nach Anspruch 1,
**dadurch gekennzeichnet, dass** das Kopplungselement (30) einen Hydraulikschlauch enthält.

7. Steckvorrichtungssystem (100) nach Anspruch 6,
**dadurch gekennzeichnet, dass** die Hydraulik eine elektrisch nicht leitfähige Flüssigkeit enthält.

8. Steckvorrichtungssystem (100) nach einem der Ansprüche 1 oder 3-7,
**dadurch gekennzeichnet, dass** das Kopplungselement (30) lösbar mit den Aktuator (20) und/oder dem Steckvorrichtungselement (10) verbunden ist.

9. Steckvorrichtungssystem (100) nach einem der Ansprüche 1 oder 3-8,
**dadurch gekennzeichnet, dass** der Aktuator ein elektromechanischer Aktuator (20) ist.

10. Steckvorrichtungssystem (100) nach einem der Ansprüche 1 oder 3-8,
**dadurch gekennzeichnet, dass** der Aktuator ein manuell zu betätigendes Element ist.

11. Verfahren nach Anspruch 2,
**dadurch gekennzeichnet, dass** das Zielbauteil (11) in einer Verriegelungsposition ein eingestecktes komplementäres Steckvorrichtungselement verriegeln kann und in einer Öffnungsposition dessen Steckvorgang freigibt.

12. Steckvorrichtungssystem (100) nach einem der Ansprüche 1 oder 3-10,
**dadurch gekennzeichnet, dass** das Zielbauteil ein Stift (11) ist, der in einer Verriegelungsposition in die Nut oder hinter eine Nase eines eingesteckten komplementären Steckvorrichtungselementes eingreift.

13. Steckvorrichtungssystem (100) nach einem der Ansprüche 1, 3-10, oder 12,
**dadurch gekennzeichnet, dass** das Steckvorrichtungselement (10) eine Gerätedose ist.

## Claims

1. Plug device system (100), comprising:
- a plug device element (10) with a corresponding movable target element (11);
- an actuator (20) for an active and/or passive movement of an actuator element (21);
**characterized by**
- a flexible coupling element (30) for transmission of power and/or movement from the actuator element to the target element;
- the arrangement of actuator (20) and plug device element (10) on different carriers which can move independently of each other.

2. Procedure for movement of a target element (11) belonging to a plug device element (10), within the mentioned plug device element (10),
**characterized in that** an actuating force and/or a movement of an actuator (20) is transmitted on the target element (11) by a flexible coupling element (30), wherein the actuator (20) and the plug device element (10) are arranged on different carriers which can move independently of each other.

3. Plug device system (100) according to claim 1,
**characterized in that** the coupling element (30) contains a cable pull (32).

4. Plug device system (100) according to claim 3,
**characterized in that** the cable pull (32) is guided within a sleeve (31).

5. Plug device system (100) according to claim 4 or 5,
**characterized in that** the cable pull (32) can transmit thrust forces in axial direction.

6. Plug device system (100) according to claim 1,
**characterized in that** the coupling element (30) contains a hydraulic hose.

7. Plug device system (100) according to claim 6,
**characterized in that** the hydraulics contain an electrically non-conductive liquid.

8. Plug device system (100) according to one of the claims 1 or 3-7,
**characterized in that** the coupling element (30) has a detachable connection with the actuator (20) and/or the plug device element (10).

9. Plug device system (100) according to one of the claims 1 or 3-8,
**characterized in that** the actuator is an electromechanical actuator (20).

10. Plug device system (100) according to one of the claims 1 or 3-8,
**characterized in that** the actuator is an element to be operated manually.

11. Procedure according to claim 2,
**characterized in that** the target element (11) can lock an inserted complementary plug device element in a locking position and releases its plugging process in an opening position.

12. Plug device system (100) according to one of the claims 1 or 3-10,
**characterized in that** the target element is a pin (11), which engages in a locking position into the groove or behind a nose of an inserted complementary plug device element.

13. Plug device system (100) according to one of the claims 1, 3-10, or 12,
**characterized in that** the plug device element (10) is a connector socket.

## Revendications

1. Système de dispositif de raccordement (100), comprenant:
- un élément de dispositif de raccordement (10) avec un élément correspondant cible qui est mobile (11);
- un actionneur (20) pour un mouvement actif et/ou passif d'un élément actionneur (21);
**caractérisé par**
- un élément flexible de couplage (30) pour transmettre de la force et/ou du mouvement de l'élément actionneur à l'élément cible;
- la disposition de l'actionneur (20) et de l'élément de dispositif de raccordement (10) sur des porteurs différents qui peuvent bouger indépendamment l'un de l'autre.

2. Procédé pour le mouvement d'un élément cible (11) appartenant à un élément de dispositif de raccordement (10) dans l'élément de dispositif de raccordement (10) mentionné,
**caractérisé en ce qu**'une force d'actionnement et/ou un mouvement d'un actionneur (20) est transmis à l'élément cible (11) par un élément flexible de couplage (30), l'actionneur (20) et l'élément de dispositif de raccordement (10) étant disposés sur des porteurs différents qui peuvent bouger indépendamment l'un de l'autre.

3. Système de dispositif de raccordement (100) selon la revendication 1,
**caractérisé en ce que** l'élément de couplage (30) contient une traction par câble (32).

4. Système de dispositif de raccordement (100) selon la revendication 3,
**caractérisé en ce que** la traction par câble (32) est guidée dans un manchon (31).

5. Système de dispositif de raccordement (100) selon la revendication 4 ou 5,
**caractérisé en ce que** la traction par câble (32) peut transmettre des efforts tranchants en direction axiale.

6. Système de dispositif de raccordement (100) selon la revendication 1,
**caractérisé en ce que** l'élément de couplage (30) contient un tuyau hydraulique.

7. Système de dispositif de raccordement (100) selon la revendication 6,
**caractérisé en ce que** l'hydraulique contient un liquide électriquement non-conducteur.

8. Système de dispositif de raccordement (100) selon une des revendications 1 ou 3-7,
**caractérisé en ce que** l'élément de couplage (30) est relié avec l'actionneur (20) et/ou l'élément de dispositif de raccordement (10) de manière détachable.

9. Système de dispositif de raccordement (100) selon une des revendications 1 ou 3-8,
**caractérisé en ce que** l'actionneur est un actionneur électromécanique (20).

10. Système de dispositif de raccordement (100) selon une des revendications 1 ou 3-8,
**caractérisé en ce que** l'actionneur est un élément à actionner manuellement.

11. Procédé selon la revendication 2,
**caractérisé en ce que** l'élément cible (11) peut - en position de verrouillage - verrouiller un élément de dispositif de raccordement complémentaire inséré et - en position d'ouverture - lâche son processus de raccordement.

12. Système de dispositif de raccordement (100) selon une des revendications 1 ou 3-10,
**caractérisé en ce que** l'élément cible est une broche (11), qui engage en position de verrouillage dans la rainure ou derrière un ergot d'un élément inséré complémentaire de dispositif de raccordement.

13. Système de dispositif de raccordement (100) selon une des revendications 1, 3-10, ou 12,
**caractérisé en ce que** l'élément de dispositif de raccordement (10) est un boîtier.
